# EUROPÄISCHE PATENTSCHRIFT

(11) **EP 3 645 926 B1**
(45) Veröffentlichungstag und Bekanntmachung des Hinweises auf die Patenterteilung: **07.04.2021**
(21) Anmeldenummer: 18734544.2
(22) Anmeldetag: 26.06.2018
(51) Int. Cl.: F16L 33/207

(54) **PRESSHÜLSE**
PRESS-FIT SLEEVE
MANCHON DE SERTISSAGE

(30) Priorität: 27.06.2017 DE 102017210844
(43) Veröffentlichungstag der Anmeldung: 06.05.2020
(73) Patentinhaber: Fränkische Rohrwerke Gebr. Kirchner GmbH & Co. KG, 97486 Königsberg (DE)
(72) Erfinder: WELSCH, Thomas, 97437 Haßfurt (DE)
(74) Vertreter: Weickmann & Weickmann PartmbB
(86) Internationale Anmeldenummer: PCT/EP2018/067167
(87) Internationale Veröffentlichungsnummer: WO 2019/002323

(56) Entgegenhaltungen:
- EP-A1- 0 857 906
- EP-A1- 2 677 223
- EP-A1- 2 985 504
- EP-A2- 1 489 344
- WO-A1-2004/063615
- WO-A1-2008/009573

## Beschreibung

Die vorliegende Erfindung betrifft eine Presshülse zur Verbindung von Kunststoffrohren gemäß dem Oberbegriff des Anspruchs 1.

Um Rohrelemente miteinander zu verbinden, werden Pressverbindungen verwendet. Dabei werden zwei Rohrelemente auf eine Stützhülse aufgeschoben und anschließend derart deformiert, dass zwischen Rohrelement und Stützhülse ein Formschluss oder zumindest ein hoher Reibschluss entsteht, welcher ausreichend stark ist, um eine Trennung der beiden über die Stützhülse verbundenen Rohrelemente zu verhindern. Zur gezielten Deformation der Rohrelemente wird eine das jeweilige Rohrelement abschnittsweise umgebende Presshülse verwendet.

Aus der EP 2 677 223 A1 sind Presshülsen bekannt, bei welchen an der Presshülse ein sich nach radial außen erstreckender Vorsprung ausgebildet ist. Der Vorsprung ist auf seiner radial inneren Seite mit einem Ring versehen, welcher die Struktur des Vorsprungs stützt.

Aus dem Dokument EP 0 857 906 A1 ist eine Presshülse zur Verbindung von Kunststoffrohren bekannt, welche einen zylindrischen Grundkörper umfasst, wobei an der Presshülse ein nach außen vorstehender Vorsprung durch Materialfaltung in der Wandung des Grundkörpers ausgebildet ist. Ferner sei an dieser Stelle auf die Dokumente EP 1 489 344 A2, WO 2008/009573 A1 und EP 2 985 504 A1 hingewiesen.

Insbesondere in Bezug auf die Fertigungskosten der Komponenten derartiger Pressverbindungen besteht ständiges Verbesserungspotenzial.

Es ist daher die Aufgabe der vorliegenden Erfindung eine Presshülse bzw. eine Pressverbindung bereitzustellen, welche mit vereinfachten Mitteln und insbesondere im Vergleich zum Stand der Technik kosteneffizienter hergestellt werden kann.

Diese Aufgabe wird gelöst durch eine Presshülse zur Verbindung von Kunststoffrohren gemäß Anspruch 1.

Bei aus dem Stand der Technik bekannten Presshülsen wurde der wenigstens eine Vorsprung üblicherweise unter Verwendung eines Tiefziehverfahrens ausgebildet, wodurch es im Bereich des wenigstens einen Vorsprungs zu einer Materialdehnung und somit zu einer Schwächung der Wandungsstärke kommt. Damit auch nach erfolgter Ausbildung des wenigstens einen Vorsprungs, d.h. nach der Schwächung der Wandungsstärke im Bereich des wenigstens einen Vorsprungs, eine für die vorgesehene Verwendung der Presshülse ausreichende Wandungsstärke im Bereich des wenigstens einen Vorsprungs vorlag, mussten Grundkörper mit entsprechend hohen Wandungsstärken verwendet werden oder der Grundkörper musste mit Zusatzelementen zur selektiven Stabilisierung der Wandung des Grundkörpers versehen werden. Auf Grund der Tatsache, dass der wenigstens eine Vorsprung der erfindungsgemäßen Presshülse durch eine Materialfaltung der Wandung des Grundkörpers ausgebildet ist, wird die Wandungsstärke des Grundkörpers im Bereich des Vorsprungs nicht geschwächt. Es können zur Herstellung der erfindungsgemäßen Presshülse daher Grundkörper verwendet werden, welche eine geringere Wandungsstärke aufweisen als Grundkörper bekannter Presshülsen, ohne dass es einer Anordnung zusätzlicher Stützelemente bedarf.

Der wenigstens eine Vorsprung der Presshülse kann insbesondere ermöglichen, dass unter Verwendung eines entsprechenden Presswerkzeugs zunächst nur ein Abschnitt des Grundkörpers der Presshülse deformiert wird und gemäß dem vorbestimmten Zusammenwirken der Pressbacke mit der Presshülse nachfolgend der Bereich des wenigstens einen Vorsprungs deformiert wird. Ferner kann der wenigstens eine Vorsprung der Ausrichtung eines Presswerkzeugs relativ zu der Presshülse dienen.

Die Verwendung von Grundkörpern mit einer, im Vergleich zum Stand der Technik, dünneren Wandungsstärke kann auch zur Folge haben, dass ein Presswerkzeug bzw. eine gesamte Pressvorrichtung zur Verformung der Presshülse einfacher, insbesondere in Bezug auf die auf die Presshülse zu übertragenden Kräfte, ausgebildet ist.

Zusätzlich zu der Möglichkeit, Grundkörper mit einer dünneren Wandungsstärke zu verwenden, kann die "Aufeinanderzufaltung" der beiden Flanken des Vorsprungs dem Vorsprung eine hohe Stabilität verleihen, so dass dieser zuverlässig die Funktion der Ausrichthilfe für das Presswerkzeug oder/und der Übertragung von Kräften auf das Rohrelement erfüllen kann. Wie bereits voranstehend erwähnt, kann die vorliegende Erfindung den Vorteil bieten, dass kein zusätzliches den Vorsprung stützendes Element mit der Presshülse verbunden werden muss. Dies kann sich weiter vorteilhaft auf die Fertigungskosten der erfindungsgemäßen Presshülse auswirken.

Es sei an dieser Stelle erwähnt, dass der Übergang der dem Wellenberg entgegengesetzten Enden der Flanken des Vorsprungs in den zylindrischen Grundkörper an der dem Innenraum der Presshülse zugewandten Seite der Wandung des Grundkörpers einen Radius aufweisen kann, welcher bei der Betrachtung des Abstands der beiden Flanken zueinander unbeachtet bleiben kann. Alternativ kann der Vorsprung in dem Grundkörper auch derart ausgebildet sein, dass ein derartiger Radius nicht, oder beispielsweise mit einem Wert von unter 0,5 mm, insbesondere von unter 0,25 mm, ausgebildet ist. Hierfür kann die Verwendung eines Kerns vorteilhaft sein, auf welchen der Grundkörper vor der Ausbildung des wenigstens einen Vorsprungs aufgeschoben wird, wobei der Außendurchmesser des Kerns vorteilhafterweise im Wesentlichen dem Innendurchmesser des Grundkörpers entsprechen kann, so dass gewährleistet werden kann, dass sich der Grundkörper lediglich nach radial außen verformt. Der Kern kann dabei z.B. verlagerbare Vorsprünge aufweisen, welche eine Auswölbung der Wandung des Grundkörpers an einer vorbestimmten Stelle unterstützen können. Alternativ oder zusätzlich kann der Grundkörper in einer den Grundkörper zumindest teilweise umgebenden Hülle angeordnet werden, deren Innendurchmesser im Wesentlichen dem Außendurchmesser des Grundkörpers entspricht. Die Hülle kann Ausnehmungen aufweisen, welche dazu eingerichtet sind, den Abschnitt der Wandung des Grundkörpers, welcher den wenigstens einen Vorsprung des Grundkörpers ausbildet, nach dessen Umformung, aufzunehmen. Die Hülle kann dabei auch aus mehreren Elementen ausgebildet sein, welche beispielsweise zueinander verlagerbar sind.

Der Grundkörper kann aus einem Metall, insbesondere aus Aluminium, Messing, Stahl oder Edelstahl, ausgebildet sein.

Derartige Presshülsen bzw. Pressverbindungen sind insbesondere für Rohrdurchmesser im Bereich von 16 - 32 mm geeignet. Entsprechend kann der Innendurchmesser einer erfindungsgemäßen Presshülse im Bereich von 16 - 32 mm liegen.

Ein Bereich, in welchem sich ein Vorsprung in Längserstreckungsrichtung der Presshülse gemessen erstreckt, kann von 1,1 mm bis 1,5 mm, insbesondere von 1,2 mm bis 1,4 mm, vorteilhafterweise 1,3 mm, betragen.

Eine Höhe eines Vorsprungs, gemessen von dem Innenumfang des zylindrischen Grundkörpers der Presshülse nach radial außen, kann von 1,5 mm bis 1,8 mm, insbesondere von 1,55 mm bis 1,7 mm, vorteilhafterweise 1,6 mm betragen.

Ein so ausgebildeter Vorsprung kann eine hervorragende Stabilität und eine gute Durchführbarkeit der Materialfaltung vereinen.

Vorteilhafterweise kann die Presshülse wenigstens zwei Vorsprünge umfassen, welche in einer Längserstreckungsrichtung des Grundkörpers zueinander beabstandet sind.

Die wenigstens zwei Vorsprünge sind derart ausgebildet, dass die erfindungsgemäße Presshülse mit unterschiedlichsten Presswerkzeugen in Eingriff bringbar sein kann. So kann ein Presswerkzeug beispielsweise mit einem zwischen den beiden Vorsprüngen ausgebildeten Bereich eingreifen und selektiv auf diesen Bereich einwirken. Ebenso ist es denkbar, dass ein Presswerkzeug mit den wenigstens zwei Vorsprüngen im Sinne eines sehr breiten Vorsprungs eingreifen kann, d.h. jeweils mit der Außenseite der Flanke eines Vorsprungs, welche nicht zu dem anderen Vorsprung weist, mit welchem der eine Vorsprung im Sinne des einen breiten Vorsprungs zusammenwirkt.

Wie eingangs bereits erwähnt, ist es natürlich im Rahmen dieser Erfindung ebenfalls denkbar, dass das Presswerkzeug frei positioniert werden kann, wobei der wenigstens eine Vorsprung ein sequenzielles Deformieren der Presshülse ermöglichen kann.

Der Abstand zwischen zwei Vorsprüngen kann von 3 mm bis 5 mm, insbesondere von 3,5 mm bis 4,5 mm, vorteilhafterweise 4,0 mm, betragen. Ein Abstand zwischen zwei Vorsprüngen in diesem Bereich kann sich besonders vorteilhaft auf die Verpresseigenschaften der Stützhülse, und damit der gesamten Pressverbindung, auswirken.

In einer Weiterbildung der Erfindung kann wenigstens ein Vorsprung vollständig um den Außenumfang des Grundkörpers herum verlaufend ausgebildet sein.

Es ist somit möglich, dass das Presswerkzeug relativ zu der Presshülse zuverlässig in einer vorbestimmten Weise ausgerichtet werden kann, ohne dass eine rotatorische Ausrichtung der Presshülse relativ zu dem Presswerkzeug beachtet werden muss.

Besonders vorteilhaft kann es dabei sein, den um den Außenumfang des Grundkörpers herum verlaufenden Vorsprung parallel zu wenigstens einem der Längsenden des Grundkörpers auszubilden.

In dem Fall, dass wenigstens zwei Vorsprünge als vollständig um den Außenumfang des Grundkörpers herum verlaufende Ringe ausgebildet sind, kann es ferner vorteilhaft sein, diese parallel zueinander ausgerichtet auszubilden, um beispielsweise eine gleichbleibende Ausbildung des zwischen den beiden Vorsprüngen gebildeten Bereichs um den Außenumfang des Grundkörpers herum gewährleisten zu können.

Im Rahmen der vorliegenden Erfindung ist es natürlich denkbar, dass der Vorsprung nicht zwangsläufig als geschlossener um den Außenumfang des Grundkörpers herum verlaufender Ring, sondern als zumindest in einem Abschnitt unterbrochener Ring ausgebildet ist.

Vorteilhafterweise kann die Wandungsstärke des Grundkörpers einen Wert von 0,5 mm bis 1,0 mm, insbesondere von 0,6 mm bis 0,8 mm, aufweisen.

Grundkörper mit derartigen Wandungsstärken können eine gute Deformierbarkeit, insbesondere in Bezug auf die Materialfaltung zur Ausbildung des wenigstens einen Vorsprungs, mit einer hohen Stabilität vereinen, so dass eine zuverlässige Pressverbindung mit dem zu verbindenden Rohrelement gewährleistet werden kann.

Insbesondere kann der wenigstens eine Vorsprung durch Stauchung des Grundköpers in dessen Längserstreckungsrichtung ausgebildet sein.

Der Grundkörper kann dabei mit auf die beiden Längsenden, beispielsweise flächig auf die beiden Stirnseiten der Längsenden des Grundkörpers, einwirkenden Kräften beaufschlagt werden, welche groß genug sind, damit sich die Wandung des Grundkörpers aus der Mantelfläche des zylindrischen Grundkörpers hervor wölbt und so die Materialfaltung in der Wandung des Grundkörpers erzeugt wird. Hierfür kann die oben erwähnte Verwendung eines Kerns oder/und einer Hülle besonders vorteilhaft sein.

Vorteilhafterweise können sich Außenflächen der Flanken wenigstens eines Vorsprungs im Wesentlichen orthogonal zu dem zylindrischen Grundkörper der Presshülse erstrecken. Es sei erwähnt, dass der Begriff "Außenflächen" zweidimensionale Abschnitte der Außenflächen der Flanken beschreiben soll. Somit ist deutlich, dass ein sich in einem Punkt oder einer Linie erstreckender Übergang einer ersten Krümmung in eine zweite Krümmung, beispielsweise des Radius zwischen Grundkörper und Flanke in den Wellenberg, nicht als zum Grundkörper orthogonale Außenfläche der Flanke angesehen werden kann. Durch die orthogonale Ausrichtung der Außenseiten der Flanken eines Vorsprungs kann die Stabilität des Vorsprungs gegenüber einer auf den Vorsprung nach radial innen einwirkenden Kraft erhöht werden.

Die zueinander weisenden Innenflächen der Flanken liegen in einem ersten dem Wellenberg benachbarten Abschnitt aneinander an und weisen in einem zweiten dem Innenraum des Grundkörpers benachbarten Abschnitt einen in Richtung des Innenraums des Grundkörpers ansteigenden Abstand auf. Durch das Ausbilden des ersten Abschnitts kann die Stabilität des Vorsprungs gegenüber einer auf den Vorsprung nach radial innen einwirkenden Kraft als auch gegenüber einer auf den Vorsprung in einer zu der Mittelachse des Grundkörpers parallel wirkenden Kraft erhöht werden. Die Ausbildung des zweiten Abschnitts wiederum kann eine Kerbwirkung an dem Übergang zwischen einer Flanke des Vorsprungs und dem Grundkörper vermindern, da der Übergang über einen größeren Abschnitt der Wandung der Presshülse stattfinden kann.

In einer Weiterbildung der vorliegenden Erfindung kann die Presshülse ein Halteelement umfassen, vermittels welchem die Presshülse mit einem nicht zu der Presshülse gehörenden Bauteil verbunden werden kann.

Die Presshülse kann durch das Halteelement, welches auch "Fixierring" genannt wird, beispielsweise mit einer Stützhülse verbunden werden. Die Stützhülse kann sich dabei in den Innenraum der Presshülse hinein erstrecken. Vorteilhafterweise kann die Presshülse über das Halteelement derart mit der Stützhülse verbunden werden, dass die Presshülse und die Stützhülse zueinander konzentrisch angeordnet sind. In einen Spalt zwischen der Presshülse und der Stützhülse kann ein Rohrelement eingeführt werden, welches durch Deformation fest mit der Stützhülse verbunden werden kann.

Das Halteelement kann dabei relativ zu der Stützhülse oder/und zu der Presshülse rotierbar gehaltert sein.

Die Stützhülse ist vorteilhafterweise aus Messing oder aus PPSU hergestellt.

Bezüglich des Zusammenwirkens der Presshülse mit der Stützhülse sei auch auf die Beschreibung der Pressverbindung weiter unten verwiesen.

Vorteilhafterweise kann das Halteelement als von dem Grundkörper getrenntes und mit dem Grundkörpers verbindbares Element ausgebildet sein.

Somit können das Halteelement und der Grundkörper in getrennten Fertigungsschritten und beispielsweise unter Verwendung unterschiedlicher Fertigungsverfahren hergestellt werden. Da das Halteelement im Wesentlichen der Positionierung der Presshülse relativ zu der Stützhülse dient, kann das Halteelement aus einem Kunststoff, insbesondere aus Polypropylen (PP) oder aus HDPE, ausgebildet sein.

Vorteilhafterweise kann das Halteelement als Spritzgußteil ausgebildet sein.

Da die Vorteile von Spritzgussverfahren insbesondere bei hohen Stückzahlen zum Tragen kommen, kann es vorteilhaft sein, dass eine Verbindungsvorrichtung der Presshülse zur Verbindung mit dem Halteelement oder/und eine Verbindungsvorrichtung der Stützhülse zur Verbindung mit dem Halteelement über eine Baureihe von Presshülsen oder/und Stützhülsen, welche wenigstens in einem Aspekt voneinander verschiedene Geometrien aufweisen, identisch ausgebildet ist/sind. Somit können für die gesamte Baureihe der Presshülsen bzw. Stützhülsen identische Halteelemente verwendet werden.

Es sei erwähnt, dass es natürlich im Rahmen der vorliegenden Erfindung ebenfalls denkbar ist, dass das Halteelement direkt an die Presshülse oder Stützhülse angespritzt wird.

In einer Weiterbildung der vorliegenden Erfindung kann das Halteelement eine Verzahnungsstruktur mit Vorsprüngen und Ausnehmungen aufweisen, welche dazu eingerichtet ist, mit einer Verzahnungsstruktur der Presshülse in Eingriff bringbar zu sein, welche entsprechende Ausnehmungen und Vorsprünge aufweisen kann.

Durch die zueinander passenden und miteinander in Eingriff stehenden Verzahnungsstrukturen des Halteelements und der Presshülse wird das Halteelement relativ zu der Presshülse sowohl axial als auch rotatorisch gesichert.

Die Verzahnungsstruktur der Presshülse kann dabei den Vorteil aufweisen, dass diese gestanzt werden kann, wohingegen ein Rand zur Aufnahme des Halteelements üblicherweise umgeformt wird.

In einem zweiten Aspekt betrifft die vorliegende Erfindung eine Pressverbindung, umfassend eine erfindungsgemäße Presshülse gemäß obiger Beschreibung und eine Stützhülse, welche dazu eingerichtet ist, mit einem Rohr verbunden zu werden, wobei die Presshülse mit der Stutzhülse in einer vorbestimmten Position in Eingriff bringbar ist.

In Bezug auf die Presshülse oder/und die Stützhülse sei an dieser Stelle auch ausdrücklich auf die obige Beschreibung des entsprechenden Elements verwiesen.

Es ist selbstverständlich, dass die erfindungsgemäße Pressverbindung, welche in Bezug auf eine einzelne Pressverbindung mit einem Rohr beschrieben werden wird, im Rahmen der Kopplung von zwei Rohrelementen zu sehen ist. Dabei kann die Stützhülse im Wesentlichen symmetrisch ausgebildet sein, so dass an der Stützhülse zwei erfindungsgemäße Presshülsen angeordnet werden können, wobei wiederum jeweils zwischen Presshülse und Stützhülse eines der zu koppelnden Rohre angeordnet werden kann. Durch Deformation der beiden Rohrelemente können diese relativ zu der Stützhülse, und somit relativ zueinander, fixiert werden.

Im unverpressten Zustand kann zwischen der Stützhülse und dem Rohrelement eine Leckage stattfinden, d.h. es kann Fluid zwischen Stützhülse und Rohr, und somit aus dem Rohr, austreten. Die Pressverbindung erfüllt dabei auch die Funktion, eine fluiddichte Verbindung zwischen Stützhülse und Rohrelement auszubilden.

Vorteilhafterweise kann dabei der Eingriff der Presshülse oder eines mit der Presshülse verbundenen Halteelements mit der Stutzhülse eine Schnappverbindung umfassen.

Die Schnappverbindung kann dabei insbesondere an dem Abschnitt des Halteelements, welcher zur Verbindung mit der Stützhülse ausgebildet ist, oder/und an dem Abschnitt des Halteelements, welcher zur Verbindung mit der Presshülse ausgebildet ist, vorgesehen sein.

In einer Weiterbildung der Erfindung kann die Pressverbindung eine an der Stützhülse angebrachte Dichtung umfassen, welche insbesondere als O-Ring ausgebildet ist, und welche dazu eingerichtet ist, einen Spalt zwischen der Stützhülse und dem damit verbundenen Rohr abzudichten, wobei, in einer radialen Richtung der Stützhülse gesehen, der Bereich des wenigstens einen Vorsprungs des Grundkörpers und die Dichtung der Stützhülse aufeinanderfolgend sind.

Auf eine Deformation der Presshülse durch das Presswerkzeug hin kann die Presshülse auf das zu verbindende Rohr und dieses auf die an der Stützhülse angebrachte Dichtung gedrückt werden. Somit kann eine fluiddichte Verbindung zwischen der Stützhülse und dem Rohr hergestellt werden. Vorteilhafterweise kann die Dichtung wenigstens zwei O-Ringe umfassen. Der wenigstens eine Vorsprung des Grundkörpers kann dabei in Längserstreckungsrichtung der Stützhülse relativ zu dieser derart angeordnet sein, dass er über einem Bereich liegt, welcher sich über oder zwischen den beiden O-Ringen erstreckt.

Vorzugsweise kann die Pressverbindung ferner eine an der Stützhülse vorgesehene Struktur umfassen, innerhalb welcher sich die radiale Ausdehnung der Stützhülse ändert, umfassend beispielsweise mindestens eine Rippe oder mindestens eine Nut, wobei, in einer radialen Richtung der Stützhülse gesehen, der Bereich des wenigstens einen Vorsprungs des Grundkörpers und die Struktur der Stützhülse aufeinanderfolgend sind.

Insbesondere kann die sich ändernde Struktur ein in Längserstreckungsrichtung der Stützhülse fortlaufendes Sägezahnprofil aufweisen, welches derart ausgebildet ist, dass es ein Aufstecken des Rohrs auf die Stützhülse erleichtert und ein Abziehen des Rohrs von der Stützhülse erschwert. Dieses Zusammenwirken kann bereits vor der Deformation der Presshülse auftreten und auf eine Deformation der Presshülse hin verstärkt werden. Die Stützhülse kann die sich ändernde Struktur über die gesamte Länge, welche für ein Aufstecken des Rohrs zur Verfügung steht, aufweisen, beispielsweise in einem Bereich von einer Verbindungseinrichtung der Stützhülse mit dem Halteelement oder der Presshülse selbst bis zu einem entsprechenden Längsende der Stützhülse.

Ein Sägezahnprofil kann insbesondere bei einer Ausbildung der Stützhülse aus Messing vorteilhaft sein. Bei einer Ausbildung der Stützhülse aus Kunststoff, beispielsweise PPSU, kann das Sägezahnprofil abgerundet sein, um eine entsprechende Kerbwirkung zu reduzieren oder vollständig zu vermeiden.

In einer Weiterbildung der Erfindung kann ein maximaler Außendurchmesser der Dichtung geringer sein als ein maximaler Außendurchmesser der beispielsweise als Sägezahnprofil ausgebildeten Struktur. Dies kann zur Folge haben, dass auf eine Deformation des Rohrelements hin dieses zuerst mit der Struktur und nachfolgend mit der Dichtung in Eingriff tritt. Auf diese Weise kann eine besonders stabile Verbindung des Rohrelements mit der Stützhülse und dennoch eine gute Abdichtung des Spalts zwischen Rohrelement und Stützhülse erreicht werden.

Zur weiteren Sicherung des Rohrelements zwischen der Presshülse und der Stützhülse insbesondere im unverpressten Zustand der Pressverbindung, kann die Presshülse einen Prägepunkt aufweisen, welcher einen nach radial innen vorstehenden Vorsprung ausbildet. Der Vorsprung kann somit das Spaltmaß zwischen Presshülse und Stützhülse derart verringern, dass es zu einer Klemmwirkung zwischen der Presshülse und dem Rohrelement kommt.

Die vorliegende Erfindung wird im Folgenden anhand der begleitenden Zeichnungen näher erläutert werden.

### Es stellt dar:

- Figur 1: eine Seitenquerschnittsansicht einer ersten Ausführungsform einer erfindungsgemäßen Presshülse;
- Figur 2: eine Seitenquerschnittsansicht einer zweiten Ausführungsform einer erfindungsgemäßen Presshülse;
- Figur 3: eine Seitenquerschnittsansicht einer dritten Ausführungsform einer erfindungsgemäßen Presshülse;
- Figur 4: eine perspektivische Ansicht eines Halteelements;
- Figur 5a: eine Seitenquerschnittsansicht der Presshülse aus Figur 3 gemäß der Schnittlinie V-V aus Figur 5c, welche mit dem Halteelement aus Figur 4 verbunden ist;
- Figur 5b: eine perspektivische Ansicht der Anordnung aus Figur 5a;
- Figur 5c: eine axiale Ansicht der Anordnung aus den Figuren 5a und 5b, wobei die Schnittlinie V-V der in Figur 5a gezeigten Seitenquerschnittsansicht dargestellt ist;
- Figur 6: eine erfindungsgemäße Pressverbindung im unverpressten Zustand;
- Figur 7: die Pressverbindung aus Figur 6 im verpressten Zustand;
- Figur 8: eine Detailansicht eines Vorsprungs.

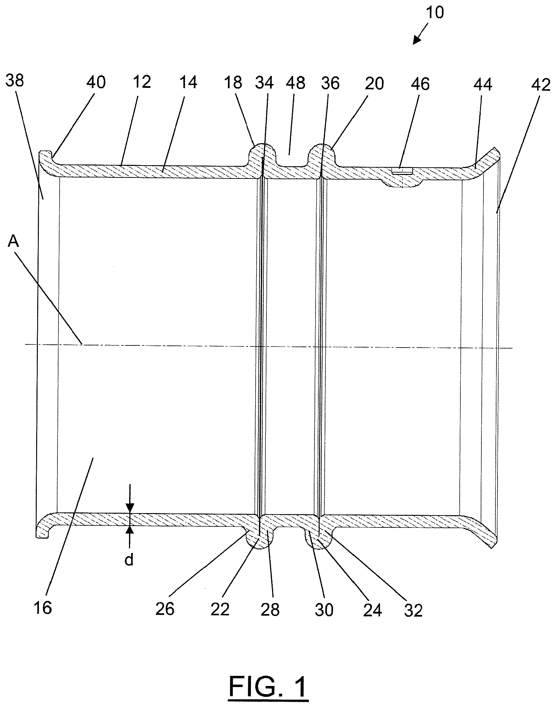

In Figur 1 ist eine erfindungsgemäße Presshülse ganz allgemein mit 10 bezeichnet.

Die Presshülse 10 umfasst einen zylindrischen Grundkörper 12, welcher eine Wandung 14 mit einer einheitlichen Dicke d aufweist.

Der Grundkörper 12 bzw. dessen Wandung 14 umgibt einen Innenraum 16.

Die Presshülse 10 weist in dem in Figur 1 dargestellten Ausführungsbeispiel zwei Vorsprünge 18 und 20 auf, welche sich von dem Außenumfang des Grundkörpers 12 in Bezug auf eine Zylinderachse A des Grundkörpers 12 radial nach außen erstrecken.

Die beiden Vorsprünge 18 und 20 sind hier als um den Außenumfang des Grundkörpers 12 ringartig herum verlaufende Vorsprünge 18 und 20 ausgebildet.

Die beiden Vorsprünge 18 und 20 sind mit dem Grundkörper 12 derart einstückig ausgebildet, dass die Vorsprünge 18 und 12 durch Materialfaltung der Wandung 14 des Grundkörpers 12 nach radial außen gebildet sind. Die Vorsprünge 18 und 20 weisen dabei Wellenberge 22 und 24 auf, an welche sich jeweils zu dem zylindrischen Grundkörper 12 verlaufende Flanken 26 und 28 bzw. 30 und 32 anschließen.

Zu dem Innenraum 16 des Grundkörpers 12 weisende Seiten der Flanken 26, 28, 30 und 32 liegen dabei derart an der jeweils gegenüberliegenden Flanke an, dass eine zu dem Innenraum 16 des Grundkörpers 12 weisende Seite des Vorsprungs 18 bzw. 20 im Wesentlichen frei von einer durch die Faltung der Wandung 14 entstehenden Nut ist. In dem in Figur 1 dargestellten Ausführungsbeispiel verbleibt jeweils lediglich eine an dem Innenumfang des Grundkörpers 12 radial umlaufende Kerbe 34 und 36, welche aus den ineinander verlaufenden Übergängen des Grundkörpers 12 bzw. von dessen Wandung 14 in die entsprechenden Flanken 26, 28, 30 und 32 gebildet ist.

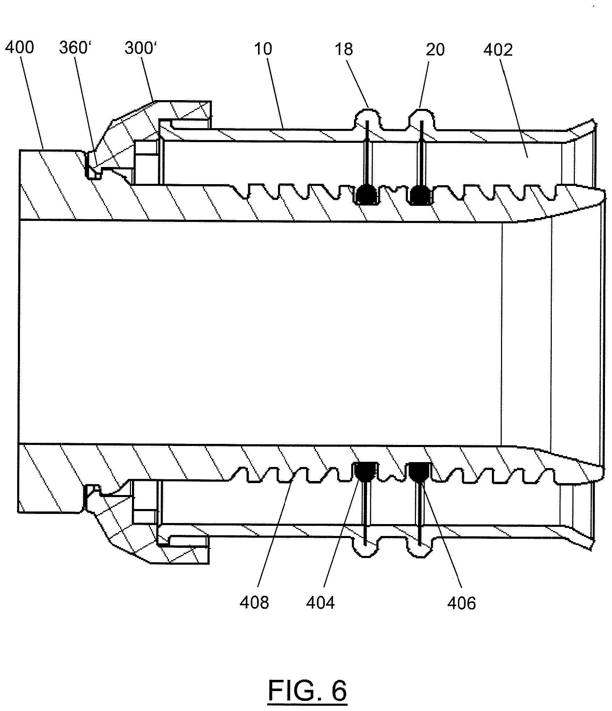

An seinem in Figur 1 links dargestellten Längsende 38 weist der Grundkörper 12 einen radial nach außen vorstehenden Rand 40 auf, welcher hier in Bezug auf den Grundkörper 12 in einem rechten Winkel und als um den Außenumfang des Grundkörpers 12 geschlossen herum verlaufend ausgebildet ist. Der Rand 40 dient dabei der Verbindung der Presshülse 10 mit einem Halteelement 300' (s. Figur 6) zur Verbindung der Presshülse 10 mit einer Stützhülse 400 (s. Figur 6).

An seinem in Figur 1 rechts dargestellten Längsende 42 weist der Grundkörper 12 einen Abschnitt 44 auf, dessen Durchmesser sich von dem zylindrischen Grundkörper 12 ausgehend allmählich erweitert. Der Abschnitt 44 kann insbesondere als Einführhilfe für ein in die Presshülse 10 einzuführendes Rohrelement dienen.

Ferner ist in Figur 1 ein Prägepunkt 46 zu erkennen, welcher zur weiteren Sicherung des Rohrelements zwischen der Presshülse 10 und der Stützhülse 400 insbesondere im unverpressten Zustand der Pressverbindung dient. Der Prägepunkt 46 bildet an seiner dem Innenraum 16 zugewandten Seite einen nach radial innen vorstehenden Vorsprung aus. Der Vorsprung kann somit das Spaltmaß zwischen Presshülse 10 und Stützhülse 400 derart verringern, dass es zu einer Klemmwirkung zwischen der Presshülse 10 und dem Rohrelement kommt. Eine unbeabsichtigte Verlagerung zwischen Presshülse 10 und Rohrelement kann somit weitgehend verhindert werden.

Ein sich zwischen den beiden Vorsprünge 18 und 20 erstreckender Bereich 48 unterstützt zusammen mit den beiden Vorsprüngen 18 und 20 eine Positionierung eines nicht dargestellten Presswerkzeug, welches derart auf die Presshülse 10 einwirkt, dass diese zumindest teilweise nach radial innen, d.h. auf die Achse A zu, deformiert wird.

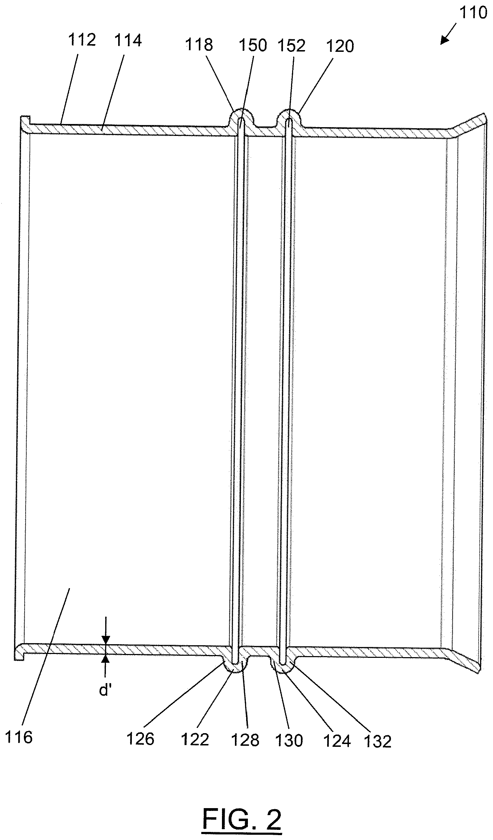

In Figur 2 ist eine zweite Ausführungsform 110 einer erfindungsgemäßen Presshülse dargestellt, welche im Wesentlichen identisch zu der Presshülse 10 ist, auf welche hiermit ausdrücklich verwiesen sei. Zu der Presshülse 10 gleiche Elemente der Presshülse 110 sind mit gleichen Bezugszeichen versehen wie diejenigen der Presshülse 10, jedoch erhöht um 100. Die Presshülse 110 wird im Folgenden insbesondere in Bezug auf ihre Unterschiede zu der Presshülse 10 beschrieben werden.

Die Presshülse 110 weist einen zylindrischen Grundkörper 112 mit einer Wandung 114 auf.

Einstückig mit der Wandung 114 sind analog zu der Presshülse 10 zwei Vorsprünge 118 und 120 ausgebildet.

Die Vorsprünge 118 und 120 sind als radial vollständig umlaufende Ringe ausgebildet.

Die Vorsprünge 118 und 120 umfassen jeweils einen Wellenberg 122 und 124, wobei sich an den Wellenberg 122 zwei Flanken 126 und 128 und an den Wellenberg 124 zwei Flanken 130 und 132 anschließen.

Im Gegensatz zu der Presshülse 10 stehen die zu einem Innenraum 116 des Grundkörpers 112 weisenden Seiten der Flanken 126 und 128 bzw. 130 und 132 nicht miteinander in Kontakt, sondern es ist ein Spalt 150 bzw. 152 zwischen ihnen ausgebildet, welcher hier in Längserstreckungsrichtung des Grundkörpers 112 gemessen etwa 0,05 mm beträgt. In dem in Figur 2 dargestellten Beispiel ergibt sich aus der Höhe der Vorsprünge 118 und 120 und einer Wandungsdicke d' der Wandung 114 des Grundkörpers 112 eine Nuttiefe, d.h. eine Tiefe des oben erwähnten Spalts, gemessen in radialer Richtung von einer Oberfläche des Innendurchmessers der Wandung 114 des Grundkörpers 112 bis zu einem auf der Innenseite des Wellenbergs 122 bzw. 124 angeordneten Grund der Nut, von in etwa 1 mm.

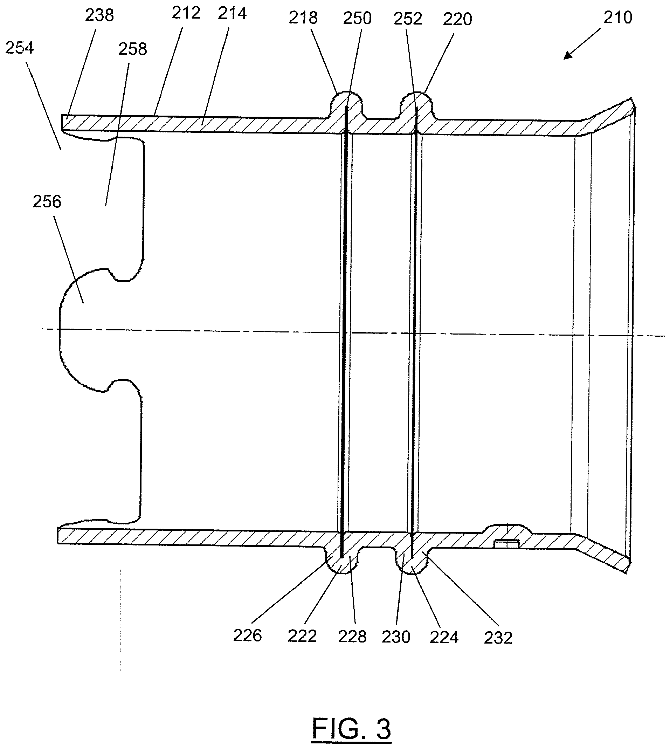

In Figur 3 ist eine dritte Ausführungsform 210 einer erfindungsgemäßen Presshülse dargestellt, welche im Wesentlichen identisch zu der Presshülse 10 bzw. zu der Presshülse 110 ist, auf welche hiermit ausdrücklich verwiesen sei. Zu der Presshülse 10 bzw. zu der Presshülse 110 gleiche Elemente der Presshülse 210 sind mit gleichen Bezugszeichen versehen wie diejenigen der Presshülsen 10 und 110, jedoch erhöht um 200 in Bezug auf die Presshülse 10 und erhöht um 100 in Bezug auf die Presshülse 110. Die Presshülse 210 wird im Folgenden insbesondere in Bezug auf ihre Unterschiede zu der Presshülse 10 bzw. zu der Presshülse 110 beschrieben werden.

Die Presshülse 210 weist einen zylindrischen Grundkörper 212 mit einer Wandung 214 auf.

Einstückig mit der Wandung 214 sind analog zu der Presshülse 10 bzw. zu der Presshülse 110 zwei Vorsprünge 218 und 220 ausgebildet.

Die Vorsprünge 218 und 220 sind als radial vollständig umlaufende Ringe ausgebildet.

Die Vorsprünge 218 und 220 umfassen jeweils einen Wellenberg 222 und 224, wobei sich an den Wellenberg 222 zwei Flanken 226 und 228 und an den Wellenberg 224 zwei Flanken 230 und 232 anschließen.

Ein sich durch die Materialfaltung zur Bildung der Vorsprünge 218 bzw. 220 radial innerhalb des Wellenbergs 222 bzw. 224 ergebender Spalt 250 bzw. 252 ist in Figur 3 lediglich als Strich dargestellt, was gemäß der vorliegenden Erfindung derart zu verstehen ist, dass damit sowohl ein Aneinanderanliegen der Flanken 226 und 228 bzw. 230 und 232 als auch ein Abstand dieser Flanken zueinander umfasst sein soll.

An dem in Figur 3 links dargestellten Längsende 238 der Presshülse 210 weist diese eine Verzahnungsstruktur 254 auf, welche Vorsprünge 256 und Ausnehmungen 258 umfasst.

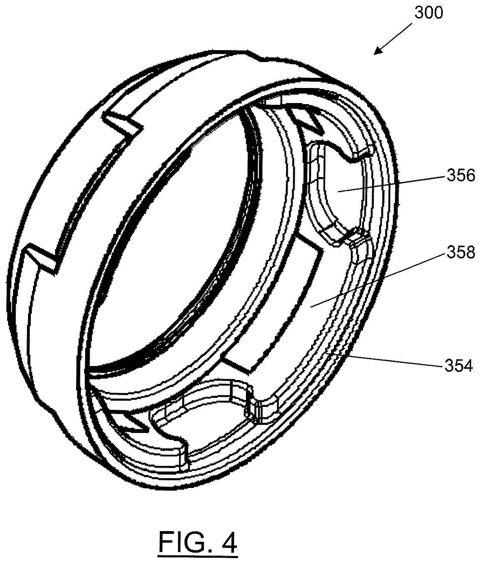

Die Verzahnungsstruktur 254 kann mit einer Verzahnungsstruktur 354, welche zu der Verzahnungsstruktur 254 passende Ausnehmungen 356 und Vorsprünge 358 umfasst, eines in Figur 4 dargestellten Halteelements 300 in Eingriff gebracht werden. Auf einen Eingriff der Verzahnungsstruktur 254 der Presshülse 210 mit der Verzahnungsstruktur 354 des Halteelements 300 hin wird das Halteelement 300 relativ zu der Presshülse 210 an dieser befestigt.

Das Halteelement 300 ist in dem hier dargestellten Ausführungsbeispiel als Spritzgußteil ausgebildet, welches in einem von der Presshülse 210 separaten Fertigungsschritt hergestellt worden ist. Das Halteelement 300 ist entsprechend aus einem hierfür geeigneten Kunststoff hergestellt.

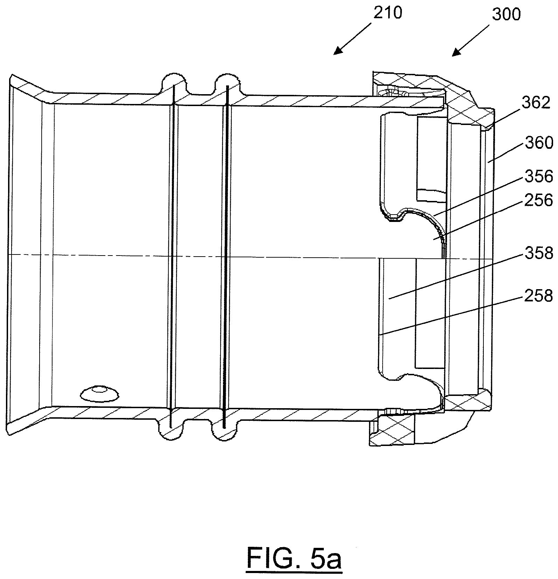

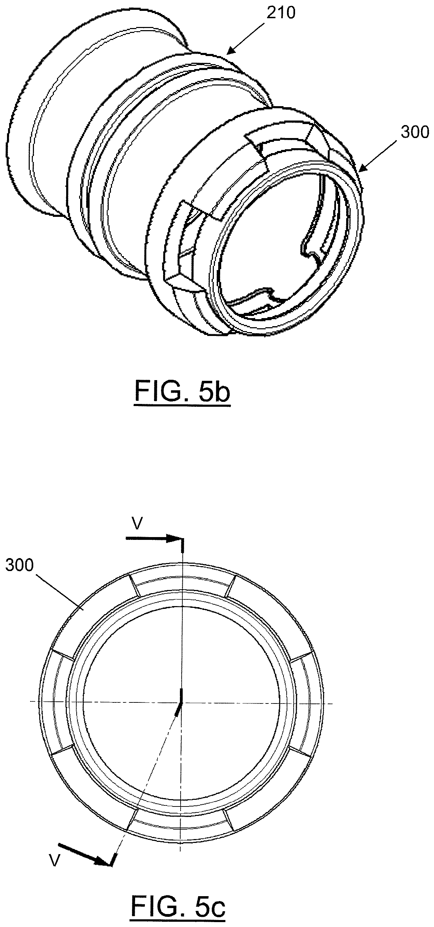

In den Figuren 5a und 5b ist die Presshülse 210 mit dem daran befestigten Halteelement 300 dargestellt. Dabei greifen Vorsprünge 256 der Presshülse 210 mit Ausnehmungen 356 des Halteelements 300 ein und Vorsprünge 358 des Halteelements 300 mit Ausnehmungen 258 der Presshülse 210 ein.

Die in Figur 5a dargestellte Seitenquerschnittsansicht verläuft gemäß der in Figur 5c dargestellten Schnittlinie V-V.

An seinem von der Presshülse 210 weg weisenden Längsende weist das

Halteelement 300 eine Verbindungseinrichtung 360 in Form eines nach radial innen vorstehenden Vorsprungs 362 auf.

Vermittels dieser Verbindungseinrichtung 360 kann die Presshülse 210 bzw. das Halteelement 300 mit einer Stützhülse verbunden werden, welche eine zu der Verbindungseinrichtung 360 des Halteelements 300 passende Verbindungseinrichtung, im Sinne einer Schnappverbindung, aufweist. Eine derartige Schnappverbindung ist auch in Figur 6 bei dem Bezugszeichen 360' zu erkennen.

Gemäß der in den Figuren 5a und 5b dargestellten Verbindungseinrichtung 360 kann das Halteelement 300 und somit die Presshülse 210 drehbar an der Stützhülse angebracht werden.

In Figur 6 ist eine erfindungsgemäße Pressverbindung in einem unverpressten Zustand dargestellt, welche die Presshülse 10, eine Stützhülse 400 und ein Halteelement 300' umfasst, welches im Wesentlichen identisch zu dem Halteelement 300 ist, mit Ausnahme der Verbindung des Halteelements 300' mit der Presshülse 10, welche hier unter Verwendung des Rands 40 der Presshülse 10 ausgebildet ist.

Das mit der Presshülse 10 verbundene Halteelement 300' greift über die oben erwähnte Verbindungseinrichtung 360 mit der Presshülse 400 ein.

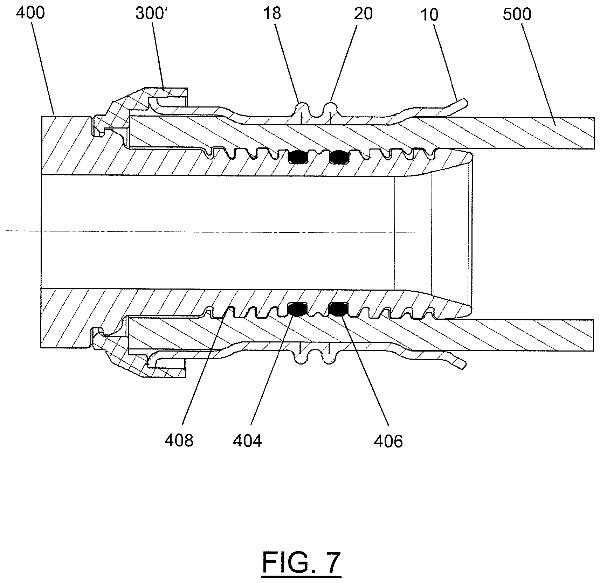

Wie weiter oben bereits beschrieben, kann in einen zwischen der Stützhülse 400 und der Presshülse 10 vorliegenden Spalt 402 ein Rohrelement 500 (s. Figur 7) eingeführt werden, welches durch Deformation an der Stützhülse 400 befestigt werden kann.

Die Stützhülse 400 weist eine Dichtung in Form von zwei O-Ringen 404 und 406 auf. Die beiden O-Ringe 404 und 406 sind an der Stützhülse 400 derart angeordnet, dass sie, bei mit der Stützhülse 400 über das Halteelement 300' verbundener Presshülse 10, unterhalb, d.h. in einer radialen Richtung innerhalb der beiden Vorsprünge 18 und 20 liegen.

Die Stützhülse 400 weist ferner eine Struktur 408 auf, welche auf eine Deformation der Presshülse 10 und damit des zu verbindenden Rohrelements hin mit dem Rohrelement eingreift, so dass ein Abziehen des Rohrelements von der Stützhülse 400 erschwert bzw. verhindert werden kann.

In Figur 7 ist die Pressverbindung aus Figur 6 in einem verpressten Zustand dargestellt.

Dabei ist zu erkennen, dass ein zwischen die Stützhülse 400 und die Presshülse 10 eingeführtes Rohrelement 500 derart deformiert ist, dass es sich in die Struktur 408 hinein erstreckt, d.h. mit der Struktur 408 einen Formschluss eingeht. Ferner drückt das Rohrelement 500 im verpressten Zustand derart auf die beiden O-Ringe 404 und 406, dass sich deren ursprünglich kreisförmiger Querschnitt zu einem elliptischen Querschnitt verformt hat. Hierdurch ist eine fluiddichte Verbindung zwischen dem Rohrelement 500 und der Stützhülse 400 hergestellt, so dass durch das Rohrelement 500 strömendes Fluid nicht zwischen Stützhülse 400 und Rohrelement 500 austreten kann.

In dem dargestellten Ausführungsbeispiel ist ferner zu erkennen, dass der Bereich der beiden Vorsprünge 18 und 20 der Presshülse 10 über dem Bereich der Dichtung, d.h. der beiden O-Ringe 404 und 406, liegt. Ein nicht dargestelltes Presswerkzeug wirkt derart auf die Presshülse 10 und damit auf das Rohrelement 500 ein, dass das Rohrelement 500 zuverlässig und fluiddicht auf die beiden O-Ringe 404 und 406 gedrückt wird.

Anstatt des in Figur 7 dargestellten deformierten Abschnitts der Presshülse 10, welcher eine im Wesentlichen einheitliche Einpresstiefe in das Rohrelement 500 aufweist, ist es ebenso denkbar, dass ein den Vorsprüngen 18 und 20 der Presshülse 10 benachbarter Bereich tiefer in das Rohrelement 500 eingepresst wird als der Bereich der beiden Vorsprünge 18 und 20. Der tiefer in das Rohrelement 500 eingepresste Bereich kann eine zuverlässige Verbindung des Rohrelements 500 mit der Struktur 408 der Stützhülse 400 gewährleisten, wobei der Bereich des Rohrelements 500, welcher unterhalb der beiden Vorsprünge 18 und 20 der Presshülse 10 liegt, lediglich so weit deformiert wird, dass er zuverlässig, d.h. fluiddicht, auf die beiden O-Ringe 404 und 406 drückt.

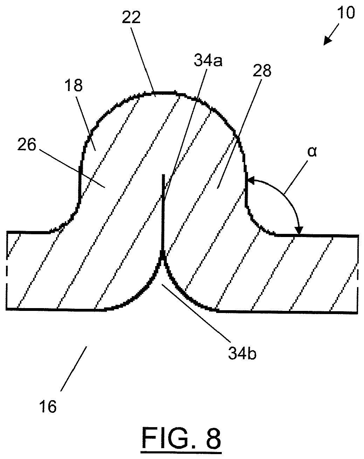

In Figur 8 ist ein vergrößertes Detail aus Figur 1 dargestellt, welches den Vorsprung 18 der Presshülse 10 zeigt. Dabei ist zu erkennen, dass die Flanken 26 und 28 derart aufeinander zu gefaltet sind, dass ein erster Abschnitt 34a der Innenflächen der Flanken 26 und 28 aneinander anliegt und ein zweiter Abschnitt 34b der Innenflächen der Flanken 26 und 28 sich allmählich in Richtung des Innenraums 16 des Grundkörpers 12 öffnet, das heißt, dass der Abstand der zueinander weisenden Innenflächen der Flanken 26 und 28 allmählich ansteigt. Beispielsweise kann sich der erste Abschnitt 34a über eine Länge von 300 µm bis 600 µm, vorzugsweise über eine Länge von 325 µm bis 525 µm, erstrecken. Der zweite Abschnitt 34 b kann sich insbesondere über eine Länge von 400 µm bis 700 µm, vorzugsweise über eine Länge von 475 µm bis 675 µm, erstrecken.

Ferner ist in Figur 8 zu erkennen, dass Außenflächen der Flanken 26 und 28 mit dem zylindrischen Grundkörper einen Winkel α von im Wesentlichen 90° bilden. Es ist dabei zu erkennen, dass sich die Außenfläche einer jeden Flanke 26 und 28 über einen nicht verschwindenden Bereich in einer in Figur 8 vertikalen Richtung erstreckt.

## Patentansprüche

1. Presshülse (10, 110, 210) zur Verbindung von Kunststoffrohren, umfassend einen zylindrischen Grundkörper (12, 112, 212) mit einer einheitlichen Wandungsstärke (14, 114, 214), welche einen Innenraum (16, 116) des Grundkörpers (12, 112, 212) umgibt,
wobei die Presshülse (10, 110, 210) wenigstens einen Vorsprung (18, 118, 218; 20, 120, 220) umfasst, welcher von einem Außenumfang des Grundkörpers (12, 112, 212) radial nach außen vorsteht,
wobei der wenigstens eine Vorsprung (18, 118, 218; 20, 120, 220) einstückig mit dem Grundkörper (12, 112, 212) durch Materialfaltung der Wandung (14, 41, 42) des Grundkörpers (12, 112, 212) ausgebildet ist, und
wobei der wenigstens eine Vorsprung (18, 118, 218; 20, 120, 220) einen Wellenberg (22, 122, 222; 24, 124, 224) mit zwei durch den Wellenberg (22, 122, 222; 24, 124, 224) verbundenen Flanken (26, 28, 126, 128, 226, 228; 30, 32, 130, 132, 230, 232) ausbildet, **dadurch gekennzeichnet, dass** deren zueinander weisende Innenflächen in einem Abstand von höchstens 1 mm, insbesondere von höchstens 0,5 mm, vorteilhafterweise von höchstens 0,1 mm, zueinander angeordnet sind oder miteinander in Kontakt stehen,
und dass die zueinander weisenden Innenflächen der Flanken (26, 28, 126, 128, 226, 228; 30, 32, 130, 230, 232) in einem ersten dem Wellenberg (22, 122, 222; 24, 124, 224) benachbarten Abschnitt (34a) aneinander anliegen und in einem zweiten dem Innenraum (16, 116) des Grundkörpers (12, 112, 212) benachbarten Abschnitt (34b) einen in Richtung des Innenraums (16, 116) des Grundkörpers (12, 112, 212) ansteigenden Abstand aufweisen.

2. Presshülse (10, 110, 210) nach Anspruch 1,
**dadurch gekennzeichnet, dass** die Presshülse (10, 110, 210) wenigstens zwei Vorsprünge (18, 20, 118, 120, 218, 220) umfasst, welche in einer Längserstreckungsrichtung des Grundkörpers (12, 112, 212) zueinander beabstandet sind.

3. Presshülse (10, 110, 210) nach Anspruch 1 oder 2,
**dadurch gekennzeichnet, dass** wenigstens ein Vorsprung (18, 118, 218; 20, 120, 220) vollständig um den Außenumfang des Grundkörpers (12, 112, 212) herum verlaufend ausgebildet ist.

4. Presshülse (10, 110, 210) nach einem der vorhergehenden Ansprüche,
**dadurch gekennzeichnet, dass** die Wandungsstärke (14, 114, 214) des Grundkörpers (12, 112, 212) einen Wert von 0,5 mm bis 1,0 mm, insbesondere von 0,6 mm bis 0,8 mm, aufweist.

5. Presshülse (10, 110, 210) nach einem der vorhergehenden Ansprüche,
**dadurch gekennzeichnet, dass** sich Außenflächen der Flanken (26, 28, 126, 128, 226, 228; 30, 32, 130, 230, 232) wenigstens eines Vorsprungs (18, 118, 218; 20, 120, 220) im Wesentlichen orthogonal zu dem zylindrischen Grundkörper (12, 112, 212) der Presshülse (10, 110, 210) erstrecken.

6. Presshülse (10, 110, 210) nach einem der vorhergehenden Ansprüche,
**dadurch gekennzeichnet, dass** die Presshülse (10, 110, 210) ein Halteelement (300) umfasst, vermittels welchem die Presshülse (10, 110, 210) mit einem nicht zu der Presshülse (10, 110, 210) gehörenden Bauteil verbunden werden kann.

7. Presshülse (10, 110, 210) nach Anspruch 6,
**dadurch gekennzeichnet, dass** das Halteelement (300) als von dem Grundkörper (12, 112, 212) getrenntes und mit dem Grundkörper (12, 112, 212) verbindbares Element ausgebildet ist.

8. Presshülse (10, 110, 210) nach Anspruch 6 oder 7,
**dadurch gekennzeichnet, dass** das Halteelement (300) als Spritzgußteil ausgebildet ist.

9. Presshülse (10, 110, 210) nach einem der Ansprüche 6 bis 8,
**dadurch gekennzeichnet, dass** das Halteelement (300) eine Verzahnungsstruktur (354) mit Vorsprüngen (358) und Ausnehmungen (356) aufweist, welche dazu eingerichtet ist, mit einer Verzahnungsstruktur (254) der Presshülse (10, 110, 210) in Eingriff bringbar zu sein, welche entsprechende Ausnehmungen (258) und Vorsprünge (256) aufweist.

10. Pressverbindung, umfassend eine Presshülse (10, 110, 210) nach einem der Ansprüche 1 bis 9 und eine Stützhülse (400), welche dazu eingerichtet ist, mit einem Rohr (500) verbunden zu werden, wobei die Presshülse (10, 110, 210) mit der Stützhülse (400) in einer vorbestimmten Position in Eingriff bringbar ist

11. Pressverbindung nach Anspruch 10,
**dadurch gekennzeichnet, dass** der Eingriff der Presshülse (10, 110, 210) oder eines mit der Presshülse (10, 110, 210) verbundenen Halteelements (300) mit der Stützhülse (400) eine Schnappverbindung umfasst.

12. Pressverbindung nach Anspruch 10 oder 11,
**dadurch gekennzeichnet, dass** die Pressverbindung eine an der Stützhülse angebrachte Dichtung (404,406) umfasst, welche insbesondere als O-Ring ausgebildet ist, und welche dazu eingerichtet ist, einen Spalt zwischen der Stützhülse und dem damit verbundenen Rohr abzudichten, wobei, in einer radialen Richtung der Stützhülse gesehen, der Bereich des wenigstens einen Vorsprungs (18, 118, 218; 20, 120, 220) des Grundkörpers (12, 112, 212) und die Dichtung der Stützhülse aufeinanderfolgend sind.

13. Pressverbindung nach einem der Ansprüche 10 bis 12,
**dadurch gekennzeichnet, dass** die Pressverbindung ferner eine an der Stützhülse vorgesehene Struktur (408) umfasst, innerhalb welcher sich die radiale Ausdehnung der Stützhülse ändert, umfassend beispielsweise mindestens eine Rippe oder mindestens eine Nut, wobei, in einer radialen Richtung der Stützhülse gesehen, der Bereich des wenigstens einen Vorsprungs (18, 118, 218; 20, 120, 220) des Grundkörpers (12, 112, 212) und die Struktur der Stützhülse aufeinanderfolgend sind.

## Claims

1. Press-fit sleeve (10, 110, 210) for connecting plastics pipes, comprising a cylindrical main body (12, 112, 212) having a uniform wall thickness (14, 114, 214) which surrounds an interior (16, 116) of the main body (12, 112, 212), the press-fit sleeve (10, 110, 210) comprising at least one projection (18, 118, 218; 20, 120, 220) which protrudes radially outwards from an outer circumference of the main body (12, 112, 212), the at least one projection (18, 118, 218; 20, 120, 220) being formed in one piece with the main body (12, 112, 212) by folding the material of the wall (14, 41, 42) of the main body (12, 112, 212), and the at least one projection (18, 118, 218; 20, 120, 220) forming a wave peak (22, 122, 222; 24, 124, 224) having two flanks (26, 28, 126, 128, 226, 228; 30, 32, 130, 132, 230, 232) connected by the wave peak (22, 122, 222; 24, 124, 224), **characterised in that** the mutually facing inner surfaces of said flanks are arranged at a distance of at most 1 mm, in particular of at most 0.5 mm, advantageously of at most 0.1 mm, from one another or are in contact with one another, and **in that** the mutually facing inner surfaces of the flanks (26, 28, 126, 128, 226, 228; 30, 32, 130, 230, 232) abut one another in a first portion (34a) adjacent to the wave peak (22, 122, 222; 24, 124, 224) and, in a second portion (34b) adjacent to the interior (16, 116) of the main body (12, 112, 212), have a spacing which increases in the direction of the interior (16, 116) of the main body (12, 112, 212).

2. Press-fit sleeve (10, 110, 210) according to claim 1, **characterised in that** the press-fit sleeve (10, 110, 210) comprises at least two projections (18, 20, 118, 120, 218, 220) which are spaced apart from one another in a longitudinal extension direction of the main body (12, 112, 212).

3. Press-fit sleeve (10, 110, 210) according to either claim 1 or claim 2, **characterised in that** at least one projection (18, 118, 218; 20, 120, 220) is extends completely around the outer circumference of the main body (12, 112, 212).

4. Press-fit sleeve (10, 110, 210) according to any of the preceding claims, **characterised in that** the wall thickness (14, 114, 214) of the main body (12, 112, 212) has a value of 0.5 mm to 1.0 mm, in particular of 0.6 mm to 0.8 mm.

5. Press-fit sleeve (10, 110, 210) according to any of the preceding claims, **characterised in that** outer surfaces of the flanks (26, 28, 126, 128, 226, 228; 30, 32, 130, 230, 232) of at least one projection (18, 118, 218; 20, 120, 220) extend substantially orthogonally to the cylindrical main body (12, 112, 212) of the press-fit sleeve (10, 110, 210).

6. Press-fit sleeve (10, 110, 210) according to any of the preceding claims, **characterised in that** the press-fit sleeve (10, 110, 210) comprises a holding element (300), by means of which the press-fit sleeve (10, 110, 210) can be connected to a component which is not part of the press-fit sleeve (10, 110, 210).

7. Press-fit sleeve (10, 110, 210) according to claim 6, **characterised in that** the holding element (300) is designed as an element which is separate from the main body (12, 112, 212) and can be connected to the main body (12, 112, 212).

8. Press-fit sleeve (10, 110, 210) according to either claim 6 or claim 7, **characterised in that** the holding element (300) is designed as an injection-moulded part.

9. Press-fit sleeve (10, 110, 210) according to any of claims 6 to 8, **characterised in that** the holding element (300) has a toothing structure (354) having projections (358) and recesses (356), which toothing structure is designed such that it can be brought into engagement with a toothing structure (254) of the press-fit sleeve (10, 110, 210) that has corresponding recesses (258) and projections (256).

10. Press-fit connection, comprising a press-fit sleeve (10, 110, 210) according to any of claims 1 to 9 and a support sleeve (400) which is designed to be connected to a pipe (500), wherein the press-fit sleeve (10, 110, 210) can be brought into engagement with the support sleeve (400) in a predetermined position.

11. Press-fit connection according to claim 10, **characterised in that** the engagement of the press-fit sleeve (10, 110, 210) or of a holding element (300) connected to the press-fit sleeve (10, 110, 210) with the support sleeve (400) comprises a snap-fit connection.

12. Press-fit connection according to either claim 10 or claim 11, **characterised in that** the press-fit connection comprises a seal (404, 406) attached to the support sleeve, which is designed in particular as an O-ring and which is designed to seal a gap between the support sleeve and the pipe connected thereto, the region of the at least one projection (18, 118, 218; 20, 120, 220) of the main body (12, 112, 212) and the seal of the support sleeve being consecutive, viewed in a radial direction of the support sleeve.

13. Press-fit connection according to any of claims 10 to 12, **characterised in that** the press-fit connection further comprises a structure (408) provided on the support sleeve, within which structure the radial extension of the support sleeve changes, comprising, for example, at least one rib or at least one groove, the region of the at least one projection (18, 118, 218; 20, 120, 220) of the main body (12, 112, 212) and the structure of the support sleeve being consecutive, viewed in a radial direction of the support sleeve.

## Revendications

1. Manchon de compression (10, 110, 210) pour le raccordement de tuyaux en plastique, comprenant un corps de base cylindrique (12, 112, 212) avec une épaisseur de paroi uniforme (14, 114, 214), qui entoure un espace intérieur (16, 116) du corps de base (12, 112, 212),
ledit manchon de compression (10, 110, 210) comprenant au moins une saillie (18, 118, 218 ; 20, 120, 220) faisant saillie radialement vers l'extérieur depuis une circonférence extérieure dudit corps de base (12, 112, 212),
dans lequel ladite au moins une saillie (18, 118, 218 ; 20, 120, 220) est formée d'une seul pièce avec le corps de base (12, 112, 212) par pliage de matériau de la paroi (14, 41, 42) du corps de base (12, 112, 212), et
dans lequel ladite au moins une saillie (18, 118, 218 ; 20, 120, 220) forme une crête d'onde (22, 122, 222 ; 24, 124, 224) avec deux flancs (26, 28, 126, 128, 226, 228 ; 30, 32, 130, 132, 230, 232) reliés par la crête d'onde (22, 122, 222 ; 24, 124, 224), **caractérisés en ce que** leurs surfaces intérieures se faisant face sont disposées à une distance de 1 mm au maximum, en particulier de 0,5 mm au maximum, avantageusement de 0,1 mm au maximum, les unes par rapport aux autres ou sont en contact les unes avec les autres,
et **en ce que** les surfaces intérieures des flancs (26, 28, 126, 128, 226, 228 ; 30, 32, 130, 230, 232) qui se font face s'appuient les unes contre les autres dans une première section (34a) adjacente à la crête d'onde (22, 122, 222 ; 24, 124, 224) et dans une deuxième section (34b) adjacente à l'intérieur (16, 116) du corps de base (12, 112, 212) ont une distance l'une de l'autre qui augmente en direction de l'intérieur (16, 116) du corps de base (12, 112, 212).

2. Manchon de compression (10, 110, 210) selon la revendication 1,
**caractérisé en ce que**
le manchon de compression (10, 110, 210) comprend au moins deux saillies (18, 20, 118, 120, 218, 220) qui sont espacées l'une de l'autre dans une direction d'extension longitudinale du corps de base (12, 112, 212).

3. Manchon de compression (10, 110, 210) selon la revendication 1 ou 2,
**caractérisé en ce que**
au moins une saillie (18, 118, 218, 20, 120, 220) est formée s'étendant complètement autour de la circonférence extérieure du corps de base (12, 112, 212).

4. Manchon de compression (10, 110, 210) selon l'une des revendications précédentes,
**caractérisé en ce que**
l'épaisseur de paroi (14, 114, 214) du corps de base (12, 112, 212) a une valeur de 0,5 mm à 1,0 mm, en particulier de 0,6 mm à 0,8 mm.

5. Manchon de compression (10, 110, 210) selon l'une des revendications précédentes,
**caractérisé en ce que**
les surfaces extérieures des flancs (26, 28, 126, 128, 226, 228 ; 30, 32, 130, 230, 232) d'au moins une saillie (18, 118, 218 ; 20, 120, 220) s'étendent essentiellement orthogonalement au corps de base cylindrique (12, 112, 212) du manchon de compression (10, 110, 210).

6. Manchon de compression (10, 110, 210) selon l'une des revendications précédentes,
**caractérisé en ce que**
le manchon de compression (10, 110, 210) comprend un élément de retenue (300) au moyen duquel le manchon de compression (10, 110, 210) peut être relié à un composant n'appartenant pas au manchon de compression (10, 110, 210).

7. Manchon de compression (10, 110, 210) selon la revendication 6,
**caractérisé en ce que**
l'élément de support (300) est adapté comme un élément séparé du corps de base (12, 112, 212) qui peut être relié au corps de base (12, 112, 212).

8. Manchon de compression (10, 110, 210) selon la revendication 6 ou 7,
**caractérisé en ce que**
l'élément de support (300) est formé comme une pièce moulée par injection.

9. Manchon de compression (10, 110, 210) selon l'une des revendications 6 à 8,
**caractérisé en ce que**
l'élément de support (300) présente une structure dentée (354) avec des saillies (358) et des évidements (356), qui est agencée pour pouvoir être mise en prise avec une structure dentée (254) du manchon de compression (10, 110, 210), qui présente des évidements (258) et des saillies (256) correspondants.

10. Raccordement par compression comprenant un manchon de compression (10, 110, 210) selon l'une quelconque des revendications 1 à 9 et un manchon de support (400) adapté pour être relié à un tuyau, dans lequel le manchon de compression (10, 110, 210) peut être mis en prise avec le manchon de support (400) dans une position prédéterminée.

11. Raccordement par compression selon la revendication 10,
**caractérisée en ce que**
l'engagement du manchon de compression (10, 110, 210) ou d'un élément de retenue (300) relié au manchon de compression (10, 110, 210) avec le manchon de support (400) comprend une liaison par encliquetage.

12. Raccordement par compression selon la revendication 10 ou 11,
**caractérisé en ce que**
le raccordement par compression comprend un joint (404, 406) qui est fixé sur le manchon de support, qui est adapté en particulier comme un joint torique, et qui est adapté pour étancher un espace entre le manchon de support et le tube relié à celui-ci, dans lequel, vu dans une direction radiale du manchon de support, la région de ladite au moins une saillie (18, 118, 218 ; 20, 120, 220) du corps de base (12, 112, 212) et le joint du manchon de support sont consécutifs.

13. Raccord par compression selon l'une quelconque des revendications 10 à 12,
**caractérisé en ce que**
le raccordement par compression comprend en outre une structure (408) prévue sur le manchon de support, dans laquelle l'étendue radiale du manchon de support change, comprenant par exemple au moins une nervure ou au moins une rainure, dans lequel, vu dans une direction radiale du manchon de support, la région de ladite au moins une saillie (18, 118, 218 ; 20, 120, 220) du corps de base (12, 112, 212) et la structure du manchon de support sont consécutives.
